Europäisches Patentamt

European Patent Office

Office européen des brevets

(11) Publication number: **0 170 431**
**B1**

## (12) EUROPEAN PATENT SPECIFICATION

(45) Date of publication of patent specification: 07.11.90

(51) Int. Cl.⁵: **C 11 C 3/10**

(21) Application number: **85304767.8**

(22) Date of filing: **04.07.85**

(54) Edible fats.

(30) Priority: **06.07.84 GB 8417342**

(43) Date of publication of application:
**05.02.86 Bulletin 86/06**

(45) Publication of the grant of the patent:
**07.11.90 Bulletin 90/45**

(84) Designated Contracting States:
**AT BE CH DE FR GB IT LI NL**

(56) References cited:
**EP-A-0 035 883**
**EP-A-0 093 602**
**AU-B- 544 682**
**FR-A-2 340 979**

(73) Proprietor: **UNILEVER PLC**
**Unilever House Blackfriars P.O. Box 68**
**London EC4P 4BQ (GB)**
(84) **GB**

(73) Proprietor: **UNILEVER NV**
**Burgemeester s'Jacobplein 1 P.O. Box 760**
**NL-3000 DK Rotterdam (NL)**
(84) **BE CH DE FR IT LI NL AT**

(72) Inventor: **Crook, Stephen**
**Woodbine Cottage High Street**
**Goring-on-Thames Oxon, RG8 9BB (GB)**
Inventor: **Macrae, Alasdair Robin**
**28 Leyside Bromham**
**Bedford MK43 8NE (GB)**
Inventor: **Moore, Harry**
**25 Pavenham Road Oakley**
**Bedford (GB)**

(74) Representative: **Dries, Antonius Johannes Maria**
**et al**
**Unilever N.V. Patent Division P.O. Box 137**
**NL-3130 AC Vlaardingen (NL)**

Courier Press, Leamington Spa, England.

# EP 0 170 431 B1

**Description**

This invention relates to edible fats particularly for use in emulsion food spreads such as margarine. Margarine and other emulsion food spreads, and also fat blends such as are used in shortenings, are customarily composed of a base stock, often of a liquid or at any rate very soft consistency at ambient temperature, eg, 18°C, and a hardstock fat, the two being blended together in judicious proportions to give the best possible consistency requirements for packing, handling and consumption. In particular, the base stock may be selected for dietary purposes from oils, particularly of vegetable origin, which are rich in polyunsaturated fatty acid glycerides. By contrast, the triglycerides of hardstock fat is composed of substantial amounts of saturated fatty acids, generally of $C_{18}$ fatty acid triglycerides, an important exception to this generally being hardstock derived from palm oil, almost half the fatty acid residues of which are composed of palmitic acid. Hardstock fats may also contain a proportion of the so-called lauric fats, containing 50% or more of the shorter-chain range of saturated fatty acids $C_{10}$—$C_{14}$, and a relatively low degree of unsaturation particularly coconut and palm kernel oils. Most other vegetable oils from which hardstock fats are prepared are normally liquid and are hydrogenated and/or fractionated for this purpose. When saturated they yield substantial amounts of tristearin, i.e. tristearoyl triglyceride of other fatty acids. Hardstock fats may also be prepared from animal sources of fats. They usually exhibit solids content of at least 20 at 20°C measured by NMR methods.

In addition to fractionation and hydrogenation, edible fats and oils may be modified by interesterification, a process in which fats and oil are composed, are rearranged to provide in effect different melting characteristics, and often also different polymorphism often having quite profound effects on the organoleptic response to the fat and products on which it is based.

The present invention provides an improved process for the production of interesterified fats suitable for use in emulsion and other fat-based food products such as margarine. It provides a process for the preparation of interesterified fat or glyceride oil in which a mixture of fatty reactants as interesterification catalyst is interesterified in the presence of a lipase enzyme and a small amount of water to activate the catalyst and recoverying a hardstock fat having a solid content of at least 20 at 20°C, the process including if necessary a hardening and/or fractionation step and the fatty reactants of the said mixture comprising $C_{16}$/$C_{18}$ fat or glyceride oil and a fatty reactant containing lauric or shorter chain fatty acid residues.

Enzyme interesterification of fats is disclosed in our British patent Specification No. 1577933. The process may be carried out in a water-immiscible solvent such as hexane or in liquid phase without a solvent. The process may be operated batch-wise or continuously.

Preferably the solvent comprises an aliphatic liquid boiling at not more than about 100°C, particularly saturated paraffins such as hexane, or other water-immiscible solvents. The interesterification may also be carried out under pressure using solvents normally boiling at ambient conditions.

In the process of the present invention interesterification and fractionation steps may be carried out in organic solvent in which the fat, enzyme, water to activate the enzyme, and enzyme dispersant material are distributed and from which pre-selected glycerides are fractionated.

The solvent must be substantially water immiscible in the interesterification reaction.

The temperature of the interesterification reaction should be maintained at limits between which the catalyst remains active, preferably from 20° to 80°C, more particularly from 40°C to 70°C. Lower temperatures than this may nevertheless be suitable and enable fractionation by crystallisation to be performed *in situ* with the reaction, for example at 5° to 20°C, for the purpose of directing fat compositions in an interesterification introducing high yields of pre-determined glycerides.

The enzyme catalyst is preferably used in conjunction with a dispersant or support for example, an inorganic particulate material which is inert to the reaction, such as kieselguhr, eg, Celite, or a synthetic resin. The catalyst may be prepared on a Celite or similarly inert support in accordance with the description given in our British patent specification No. 1,577,933.

Enzyme catalysts are preferably activated for use in the process of the invention, by contact with water. The activated catalyst is then maintained in an active condition by controlling the removal of water from it during the reaction. In accordance with the process described in our European specification No. 93602 the water activity of the system in which the catalyst operates is maintained between predetermined limits according to the requirements of the catalyst, to maintain the activity, consistent with the desirability of inhibiting hydrolysis.

The process of interesterification may be batchwise or continuous; in the latter event the reactants in liquid phase may be conducted in a continuous stream over a fixed bed of the catalyst. The water activity of the system may then be controlled by careful control of the water content of the stream, according to the extent to which water is miscible in it. Solvents must be selected for this reason from among organic liquids in which water is only slightly miscible, preferably below 1% and more preferably below 0.1%. All percentages are by weight. The feedstock ie, reactants and any solvent may be saturated with water and combined with dry feedstock before use, to provide a stream containing the predetermined amount of water, or the temperature of the saturated stream can be adjusted to give the required water activity. Alternatively, the water content of the silica-gel or similar may be hydrated to a predetermined extent.

Preferably the water activity of the feedstock is maintained at 0.4 to 0.85. Other values may be pre-

2

selected in accordance with the characteristics of the catalyst, the period of the interesterification reaction and the degree of hydrolysis that can be tolerated.

Enzymes may be used as interesterification catalysts in the process of the invention which are derived from microbial, vegetable or animal sources. *Candida cylindracae* lipase is non-specific and provides a true randomisation of all fatty acid radicals on all the glyceride positions. Porcine pancreatic lipase, *A. niger* and *Rhizopus* enzymes, eg, *R. arrhizus* and *R. japonicus* lipases are all specific to the 1,3 terminal acid radicals, giving very little change in any 2-position acid radicals, as are *Mucor javanicus, Mucor miehei* and *Thermomyces* lipases.

The amount of catalyst present may vary from 0.5 to 10%, but amounts outside these limits may also be used. The catalyst is preferably activated with water before use in the reaction.

The catalyst is also preferably used in conjunction with a dispersant for example, an inorganic particulate material which is inert to the reaction, such as kieselguhr, eg, Celite or a synthetic resin. The catalyst may be prepared on a Celite support in accordance with the description given in our British patent specification No. 1,577,933. It is preferable activated by contact with water, before participation in the reaction.

The catalyst may be random in its effect, catalysing the exchange on all three positions of the glycerides present. Preferably however, the catalyst is selectively reactive in the 1- and 3-positions, eg, *Aspergillus niger* lipase. The effect of a catalyst which is active selectively according to the positions on the glyceride structure is to limit the number of glyceride species present in the rearranged product, providing important improvements in the fractionation of the product which may then more readily yield fractions more nearly optimal for particular requirements. The number of rearranged glyceride species present in substantial amount may be further reduced under the influence of positionally selective catalysts, by the use as the fatty reactant of a single fatty acid or its glyceride. Reaction of HHH with an acid M using a 1,3-selective catalyst will produce the glycerides MHH and MHM only, which are more or less readily separable from one another and from HHH by conventional fractional crystallisation. The invention therefore further provides a process comprising the steps of hydrogenating and interesterifying in either order, a mixture of a fat or glyceride oil with a fatty acid reactant in which as interesterification catalyst a 1,3 selective enzyme is used and in which if desired the rearranged product fat is fractionated particularly to recover a mid-fraction.

The process of the invention may be applied to vegetable, animal and marine oil, eg. sunflower, soya palm groundnut, cottonseed and olive oils, and the so-called lauric fats eg, coconut and palm kernel oils in which substantial amounts of lauric acid residues are present. The fatty reactant may comprise an ester of a mono-hydroxylic or polyhydroxylic alcohol, especially a glyceride, eg, the above fats and their fatty acids. Fatty acids and the fatty acid residues of esters with which the glycerides of the $C_{16}/C_{18}$ fats or glyceride oils may be rearranged in accordance with the invention may contain from 3—14 carbon atoms or 20 carbon atoms upwards. A hydrogenation step which may be performed before or after the rearrangement, may be necessary to provide an adequate degree of hardness in the product fat, which may then be fractionated as a further refinement. Highly saturated fat may be less easily reacted in the liquid phase and the hydrogenation step is therefore preferably after the enzyme reaction. In general the arrangement reactants usually include at least one comprising saturated fatty acid residues in the form of a free fatty acid or ester, including glycerides.

An important aspect of rearrangement of hardstock fats in accordance with the invention is the modification of palm oil. This oil contains substantial amounts of palmitic acid in glycerides and exhibits very slow crystallisation rates, with the result that post-crystallisation develops during storage in margarine containing palm oil and its derivatives, leading to an undesirable condition known as graininess. This condition may be modified by rearrangement with lauric fats or others containing substantial amounts of $C_{12}$ fatty acid, in accordance with the present invention. By means of the invention, hardstock fats can be obtained containing from 40—75% of glycerides of carbon number 46—48, giving superior melting profiles to margarine in which they are included in amounts as little as 8—15% in blends with high PUFA vegetable oils. In general, such hardstock fats may be present in margarine fat in an amount from 5 to 20% of a blend with a liquid vegetable oil base stock.

Another important feature of the present invention is the provision of the process for the preparation of asymmetric glycerides MHH in which $H=C_{16}/C_{18}$ and M is preferably a saturated fatty acid residue of much shorter chain length less than 8 carbon atoms and preferably from 2 to 6, particularly $C_4$. These triglycerides may be used as components in margarines and emulsion food spreads to provide textural and/or melting characteristics to food spreads akin to butter.

Highly unsaturated marine oil is hydrogenated to confer flavour stability for edible purposes and the resulting increase in melting characteristics may be improved by interesterification of the hardened oil or blends with other fats, in accordance with the invention to provide margarine hardstock fats.

The grainy texture observed on storing fat mixtures containing high levels of lard, may be eliminated by interesterification in accordance with the invention to provide compositions with improved plastic range which are suitable for use in shortening and as margarine fats.

Blends of palm oil with lauric fats or their hardened derivatives may be improved by interesterification in accordance with the invention, for example equal parts of hardened palm oil and hardened palm kernel oil.

3

An effective hardstock for margarine may also be obtained by interesterification of soya bean oil and hardened lauric fat eg. hardened coconut oil. This interesterified product may be blended as a hardstock, with as much as 80% highly unsaturated oil, giving a good margarine fat with essential fatty acid content and a low trans content.

Similarly a blend of hardened lauric fat and liquid oils containing longer chain fatty acids eg. fish oil or rapeseed oil, may be interesterified using lipase enzymes as catalyst in accordance with the invention, to provide hardstock for margarine and other emulsion food products particularly low fat spreads. Hardstock fats made in accordance with the invention may also be used in artificial creams and ice-cream.

Although fatty acids of 14 or less carbon atoms which are found in nature are generally saturated, it should be understood that the present invention is not confined to the preparation of saturated triglycerides, but extends to the preparation of unsaturated triglycerides, in which a shorter-chain acid is introduced, to provide asymmetric or symmetric unsaturated triglycerides.

In our patent specification EP 93602 a continuous interesterification process is described using as catalyst lipase enzyme packed in a fixed bed and maintaining a residence time less than 6 hours which is sufficient to effect interesterification, in which triglyceride oils and fats or their fractionated and hydrogenated derivatives, for example palm and shea oils are rearranged and in which fatty acids are used containing 3 to 20 carbon atoms particularly meristic, palmitic and stearic acids.

In Australian patent specification AU—B—77623/81, a process is described for the preparation of a hard butter by selective transesterification of a glyceride fat or oil in the presence of a lipolytic enzyme catalyst, part or all of the by-product also obtained being hydrogenated and reused. The glycerides of the product are essentially 2 oleoyl triglycerides in which the 1 and 3 positions are occupied by fatty acids having 14 to 22 carbon atoms.

Example I

A mixture of one part soyabean oil with 0.45 parts of lauric acid was dissolved in 2.9 parts by weight of hexane and the solution percolated at a feed rate of 4.3 kilogrammes per hour, corresponding to 1.0 kilogrammes per hour of soyabean oil, down a reactor column maintained by a heating jacket at 40°C and containing a packed bed of a 1,3-selective interesterification catalyst, comprising *Mucor Miehei* lipase supported on Celite. The catalyst was pre-wetted to a water content of 10% and conditioned by slurrying in a mixture of hexane with soyabean oil before use. The feed rate provided a residence time in the reactor of about 20 minutes. The feed was pre-wetted by passage through silica gel with added water giving a water activity $A_w$ of 0.85.

The reactor effluent collected over 100 hours was distilled to remove solvent, extracted with methanol to remove free fatty acid and hydrogenated using an active nickel catalyst to an iodine value less than 2.

The substantially saturated product (A) was fractionated from acetone solution with removal of a stearine fraction to recover from the solution an olein fraction (B) in 73% yield of (A).

Margarine was made by conventional methods, from blends of sunflower oil with 8 and 10% of (B) as hardstock. Tests showed that with only 8% a satisfactory product was obtained, with a required hardness after 4 days, determined by Penetrometer measurements at 5—20°C and "thinness" measured by viscosity at 34°C on unstabilised fat. At 10% level a much harder, less than product was obtained.

Comparison of solids content of the olein (B) with a mid-fraction (C) recovered from it in 60% yield by acetone fractionation, indicated that even less (C) would be required to achieve comparable results in similarly prepared margarine.

Results are tabulated in Table 1 with a comparison margarine made by similar methods using as hardstock (D), a randomised mixture of equal parts of palm kernel oil hardened to 39°C and palm oil hardened to 58°C by hydrogenation using a non-selective active catalyst. It was found that 13% of this randomised hardstock was required to give hardness data compared with only 8% of the olein hardstock (B) according to the invention, but that randomised hardstock produced substantial loss of "thinness". Table 1 also includes idealised requirements.

TABLE 1

| Hardness (4 days) at °C | (D) (13%) | (B) (8%) | (B) (10%) | Idealised requirements |
|---|---|---|---|---|
| 5 | 300 | 230 | 435 | 250 |
| 10 | 200 | 200 | 470 | 200 |
| 15 | 150 | 195 | 310 | 150 |
| 20 | 100 | 120 | 250 | 100 |
| Thinness | 150 | 84 | 140 | 100 |

4

Table 2 gives the carbon number analysis of the various fats (A), (B), (C), (D) and (E). Fat (E) is a mid-fraction obtained from (D) by successively fractionating to remove triglycerides with carbon numbers above 48 and below 44.

The major triglyceride species permitted in the products (A), (B) and (C) according to the invention as a result of the selective 1,3 activity of the catalyst are as follows:

| $HM_2$ | $H_2M$ | $H_3$ |
|---|---|---|
| | | PStP |
| | | PStSt |
| LaStLa | LaStP | StStSt |
| | LaStSt | |

No lauric acid or palmitic acid is present in the 2-position.

This very limited range of species compares markedly with a much greater number in random rearrangements and substantially improves the case and effect of fractionation of the rearranged fats of the invention. Thus the reaction product (A) was easily fractionated to give the olein (B) with much reduced (HHH) in 73% yield and then a mid-fraction in 60% yield, relatively high in (MHH) and reduced in (MHM). Both yields are based on (A).

By contrast the reaction product (D) was much less amenable to fractionation, producing only 30% of the mid-fraction (E) after removing triglycerides with carbon number greater than 48 and less than 44.

In Table 3 solid content values over a range of temperatures is given for the fats (B), (C) and (D), measured by NMR determinations. from these it is clear that (B) is sharp melting, and (C) even more so, while (D) is markedly inferior.

Table 3 includes solid contents measurements of blends of the hard stock fats (B), (C) and (D), in blends with sunflower oil at 8%, 10% and 14% level, and shows that the values for blends with (C) were much higher than (B), which in turn were higher than (D) and that similar solids contents to (D) at 14% were obtained from (B) at 10% and (C) at only 8%.

## TABLE 2

| Glyceride species | C No. | Example (A) | | (B) olein | | (C) mid | | Control (D) | (E) mid |
|---|---|---|---|---|---|---|---|---|---|
| | 30—38 | 2.0 | | 3.5 | | 2.0 | | 14.8 | 4.7 |
| | 40 | 1.0 | | 1.5 | | 0.5 | | 8.6 | 5.5 |
| $HM_2$ | 42 | 15.5 | | 21.0 | | 13.5 | | 12.9 | 12.7 |
| | 44 | 1.5 | | 2.5 | | 2.0 | | 11.9 | 17.8 |
| $H_2M$ | { 46 | { 9.0 | 45.4 | { 12.0 | 57.5 | { 13.5 | 71.0 | 15.6 | 26.6 |
| | 48 | 36.5 | | 45.5 | | 57.5 | | 14.1 | 20.6 |
| $H_3$ | { 50 | { 3.5 | | { 4.0 | | { 4.0 | | 8.6 | 7.0 |
| | 52 | 9.0 | 32.5 | 7.0 | 15 | 8.0 | 16.5 | 7.8 | 3.2 |
| | 54 | 20.0 | | 4.0 | | 4.5 | | 4.1 | 1.3 |
| | 56 | 1.0 | | 0.5 | | 0.5 | | | |
| Total | | 99.0 | | 101.5 | | 99.0 | | 98.4 | 99.4 |

## TABLE 3

| | $N_{20}$ | $N_{25}$ | $N_{30}$ | $N_{35}$ | $N_{40}$ | $N_{45}$ | $N_{50}$ | $N_{55}$ | $N_{60}$ |
|---|---|---|---|---|---|---|---|---|---|
| (B) | 96.3 | 95.7 | 95.2 | 93.6 | 79.5 | 40.0 | 0.4 | 0.1 | 0 |
| (C) | 97.1 | 96.8 | 95.9 | 95.5 | 94.4 | 69.3 | 2.3 | 0 | 0 |
| (D) | 88.5 | 82.3 | 68.0 | 51.9 | 30.3 | 12.5 | 0 | 0 | 0 |

TABLE 4

| | | $N_{20}$ | $N_{25}$ | $N_{30}$ | $N_{35}$ | $N_{40}$ | $N_{45}$ | $N_{50}$ | $N_{55}$ | $N_{60}$ |
|---|---|---|---|---|---|---|---|---|---|---|
| 8% | (B) | 10.7 | 9.8 | 9.4 | 7.3 | 5.7 | 4.2 | 2.3 | 0 | 0 |
| | (C) | 12.0 | 12.0 | 11.6 | 9.9 | 8.0 | 5.9 | 3.6 | 0.7 | 0.4 |
| | (D) | 9.2 | 8.8 | 7.4 | 5.2 | 3.8 | 2.7 | 1.5 | 1.0 | 0 |
| 10% | (B) | 13.7 | 13.5 | 2.1 | 9.7 | 8.3 | 6.6 | 3.9 | 0.6 | 0.1 |
| | (C) | 13.6 | 13.6 | 13.0 | 10.7 | 9.3 | 7.4 | 5.5 | 2.0 | 0.5 |
| | (D) | 10.5 | 9.2 | 8.3 | 6.4 | 5.2 | 3.3 | 1.9 | 0.4 | 0 |
| 14% | (B) | 17.5 | 17.2 | 15.5 | 13.7 | 11.7 | 9.1 | 6.4 | 2.1 | 0.4 |
| | (C) | 18.5 | 17.6 | 16.6 | 15.2 | 12.4 | 10.3 | 7.6 | 4.0 | 0.7 |
| | (D) | 15.7 | 14.9 | 13.1 | 10.4 | 8.8 | 6.7 | 3.8 | 2.1 | 0.8 |

Example II

A mixture of 0.1 parts butyric acid with 1 part of a mid-fraction of palm oil (PMF) was dissolved in 2 parts of petroleum ether (BPt 100—120°C), all by weight, and percolated at an average feed-rate of 10 mls per hour and 40°C, up a column. The column was packed with 8 gms of catalyst comprising Rhizopus lipase (Nagase 2A) enzyme deposited on Celite as described in our British patent No. 1,577,933 and pre-activated with 10% water. The catalyst hydrolytic activity was 2.5 units per mg. Below the catalyst bed was a bed of 4 gms of Celite pre-activated with 3.6 mls water to hydrate the feedstock.

After distilling off solvent the collected reaction mixture was extracted with methanol to remove free fatty acid and glyceride isomers containing two butyric acid residues, which were preferentially dissolved in the methanol, and saturated at 100°C for two hours with hydrogen in the presence of 0.2% fresh nickel catalyst.

The saturated product was dissolved in six times its weight of acetone containing 0.5% water and after maintaining at 30°C with stirring for one hour, the solution was cooled at a cooling rate of 30°C per hour 20°C which was then held for one hour. A crystalline fraction was removed, washed twice with 0.6 times its weight each time, with acetone at 20°C and the olein recovered before being analysed and tested for its effect in margarine. Carbon number analyses are given in Table 5 showing the introduction of substantial amounts of butyric acid which as shown is absent from palm mid-fraction, and comparison is made with butter oil.

TABLE 5

| Carbon No. | Triglyceride * | PMF | Wt % fraction | Butter oil |
|---|---|---|---|---|
| 24—34 | | | 5 | 9.3 |
| 36 | PPB | | 14 | 10.5 |
| 38 | POB/PStB | | 63 | 12.6 |
| 40 | OOB/StPB/StStB | | 14 | 10.7 |
| 42—46 | | | | 20.5 |
| 48 | PPP | 5 | 2 | 8.8 |
| 50 | POP/PStP | 74 | 1 | 11.3 |
| 52 | POO/PoSt/PSt$_2$ | 19 | 1 | 10.3 |
| 54 | O$_3$/StOSt/St$_3$ | 2 | | 5.8 |

B=Butyric
O=Unsaturated
P=Palmitic
St=Stearic
*Found in PMF and rearranged fraction.

## EP 0 170 431 B1

Table 6 shows a comparison of the effect of introducing the fraction recovered into a margarine hardstock, estimated by a trained panel who expressed a marked preference for the margarine containing the recovered product. This preference was substantially maintained even after the margarine was subjected to cyclic temperature changes.

TABLE 6

| Product | Panel score |
|---|---|
| Churned butter | 9.5 |
| Votator—made butter | 7.5 |
| Margarine | 3.3 |
| Temperature:<br>Cycled margarine | 3.0 |
| Margarine+15% fraction | 7.2 |
| Margarine+15% fraction,<br>temperature—cycled | 6.5 |

The solid content data in Table 7 shows that the margarine remained acceptable in its melting properties after addition of the fraction.

TABLE 7

| N Value<br>at °C | Fraction | Margarine | Margarine+<br>15% fraction |
|---|---|---|---|
| 10 | 93.1 | 35.4 | 38.28 |
| 20 | 90.7 | 16.4 | 10.20 |
| 30 | 49.1 | 3.5 | 2.6 |
| 35 | 7.3 | 0.8 | 0 |
| 40 | 2.7 | 0 | 0 |

Example III

Blend of palm and palm kernel oil in the weight ratios 40:60, 60:40 and 80:20, were compared by carbon number analysis and melting profile, measured by pulse NMR, before and after interesterification under the influence as catalyst of *Mucor miehei* 1, 3 selective enzyme, and compared with corresponding randomised compositions using sodium methoxide randomisation catalyst in a conventional interesterification.

The oils were refined, neutralised and bleached before blending. The enzyme rearrangement reaction was carried out on a 25% dispersion by volume in the petroleum ether of the blend, which was passed at 25 ml per hour, successively through a pre-saturation column containing 4 grammes of acid-washed Celite pre-dehydrated with 80% by weight of water, and a reaction column containing 6 grammes of the enzyme supported on Celite catalyst which was prehydrated before being packed in the column, with 10% by weight of the catalyst of water. The reaction column was maintained at 40°C.

The crude product was neutralised before recovering the rearranged fat.

In Table 8 the measured carbon number for the enzyme-rearranged blend shows good agreement with the theoretical values calculated on the basis of complete reaction. Values for the corresponding randomised blends also appear for comparison.

Table 9 shows the melting profile results for the blends, both before and after silica treatment carried out on a dispersion of the blends in petroleum ether to remove partial glycerides.

The various blends were made up into a margarine fat composition consisting of 65 parts of the blend with 35 parts of low-erucic rape seed oil and melting profiles were determined as before and are given in Table 10. Margarine was prepared by conventional methods from these latter fat compositions and evaluated. Low fat water-in-oil emulsion spreads were similarly prepared from these compositions and evaluated.

7

The melting profiles show that the enzymatically interesterified reaction products are softer than their chemically interesterified counterparts and that this difference persists after silica treatment, suggesting that the difference is not entirely due to the presence of diglycerides. All the margarine fat compositions are however acceptable for margarine and low fats spread production and the products taken were found to be acceptable to consumers. The melting profile of the blend with the highest palm oil content in particular shows a substantially lower N35 value after the enzymic interesterification, demonstrating the extended flexibility of blends that can be used in this process.

Margarine and low fats spread containing less than 20% of the interesterified blend with other fat components, showed no significant difference in solids content values. Satisfactory margarine and low fats spreads was obtained in each case.

TABLE 8

Carbon number distribution of PO/PK blends and interesterified products

Carbon number

| | 30 | 32 | 34 | 36 | 38 | 40 | 42 | 44 | 46 | 48 | 50 | 52 | 54 | 56 |
|---|---|---|---|---|---|---|---|---|---|---|---|---|---|---|
| 40PO/60PK | 1.0 | 4.0 | 6.0 | 15.0 | 11.0 | 6.0 | 5.0 | 3.5 | 3.0 | 6.5 | 16.0 | 16.0 | 6.0 | 0.5 |
| enzymic | 2.0 | 3.0 | 3.0 | 7.0 | 7.5 | 10.0 | 14.0 | 11.00 | 13.5 | 11.0 | 8.0 | 7.0 | 2.5 | 0 |
| Chemical | 0 | 2.5 | 2.5 | 6.0 | 7.0 | 10.0 | 14.0 | 12.0 | 14.0 | 12.5 | 7.5 | 6.5 | 4.0 | 0.5 |
| 60PO/40PK | 0.5 | 2.5 | 4.5 | 11.0 | 8.0 | 4.0 | 3.5 | 2.5 | 2.5 | 7.5 | 22.5 | 22.5 | 7.5 | 0.5 |
| enzymic | 1.5 | 2.5 | 2.5 | 5.0 | 4.5 | 6.5 | 9.5 | 9.0 | 13.5 | 12.5 | 14.0 | 13.5 | 5.0 | 0.5 |
| chemical | 1.0 | 2.0 | 2.0 | 4.0 | 4.0 | 6.5 | 9.5 | 11.0 | 15.5 | 15.0 | 12.5 | 12.0 | 5.0 | 0.5 |
| 80PO/20PK | 0.5 | 1.5 | 3.0 | 7.5 | 5.0 | 2.0 | 1.5 | 1.5 | 1.5 | 7.5 | 29.0 | 29.0 | 9.5 | 1.0 |
| enzymic | 1.0 | 1.5 | 2.0 | 4.5 | 3.0 | 3.0 | 4.0 | 5.0 | 9.5 | 11.5 | 22.5 | 23.0 | 8.0 | 1.0 |
| chemical | 1.0 | 1.0 | 1.5 | 3.0 | 2.5 | 2.5 | 4.5 | 7.5 | 13.0 | 15.5 | 19.5 | 20.0 | 8.5 | 1.0 |

## TABLE 9

### Solids contents of PO/PK blends and interesterified products

|  | $N_0$ | $N_5$ | $N_{10}$ | $N_{15}$ | $N_{20}$ | $N_{25}$ | $N_{30}$ | $N_{35}$ | $N_{40}$ |
|---|---|---|---|---|---|---|---|---|---|
| 40PO/60PK | 72.0 | 69.5 | 60.5 | 42.0 | 23.5 | 6.5 | 2.0 | 1.0 | 1.0 |
| enzymic | 69.0 | 66.5 | 54.0 | 36.5 | 21.0 | 8.0 | 1.0 | 0.5 | 0 |
| Chemical | 73.5 | 71.0 | 64.0 | 48.0 | 30.5 | 17.0 | 4.0 | 0.5 | 0 |
| 60PO/40PK | 66.5 | 64.0 | 53.0 | 36.5 | 19.0 | 9.5 | 6.0 | 3.0 | 2.0 |
| enzymic | 60.0 | 58.5 | 46.5 | 30.5 | 17.0 | 9.0 | 4.0 | 1.0 | 1.5 |
| chemical | 67.0 | 66.0 | 58.0 | 44.0 | 29.5 | 17.5 | 8.0 | 2.0 | 1.0 |
| 80PO/20PK | 60.5 | 58.5 | 46.5 | 31.5 | 19.5 | 11.0 | 7.0 | 4.5 | 2.0 |
| enzymic | 53.0 | 52.5 | 45.0 | 31.5 | 19.0 | 11.5 | 6.5 | 3.0 | 1.0 |
| chemical | 65.0 | 64.0 | 56.0 | 43.5 | 32.0 | 21.0 | 13.0 | 6.5 | 2.0 |
| After silica treatment |  |  |  |  |  |  |  |  |  |
| 40PO/60PK | 74.0 | 72.0 | 62.0 | 46.0 | 27.0 | 8.5 | 4.0 | 1.0 | 0 |
| enzymic | 72.5 | 69.5 | 56.0 | 40.0 | 24.5 | 10.0 | 1.5 | 1.0 | 1.0 |
| commercial | 75.5 | 72.1 | 66.1 | 53.1 | 36.8 | 21.8 | 8.0 | 0.9 | 0.3 |

## TABLE 10

### Solids contents of blends containing 35% rapeseed oil

|  | $N_0$ | $N_5$ | $N_{10}$ | $N_{15}$ | $N_{20}$ | $N_{25}$ | $N_{30}$ | $N_{35}$ |
|---|---|---|---|---|---|---|---|---|
| 40PO/60PK | 42.5 | 38.5 | 28.5 | 18.0 | 6.0 | 2.5 | 1.5 | 1.0 |
| enzymic | 41.0 | 37.0 | 26.0 | 17.0 | 7.0 | 2.0 | 0.5 | 0.0 |
| Chemical | 45.0 | 41.5 | 33.5 | 23.0 | 13.5 | 7.0 | 1.0 | 1.0 |
| 60PO/40PK | 38.5 | 35.0 | 25.0 | 14.0 | 6.0 | 4.0 | 2.5 | 1.5 |
| enzymic | 35.5 | 33.0 | 23.0 | 14.5 | 7.5 | 4.0 | 1.5 | 1.0 |
| chemical | 42.5 | 40.0 | 31.5 | 22.5 | 14.5 | 8.0 | 3.5 | 1.0 |
| 80PO/20PK | 35.0 | 33.0 | 25.0 | 15.5 | 9.5 | 7.0 | 4.0 | 2.5 |
| enzymic | 31.0 | 30.5 | 23.0 | 15.0 | 9.0 | 6.0 | 3.5 | 1.0 |
| chemical | 41.0 | 39.5 | 32.5 | 23.5 | 15.5 | 11.0 | 7.0 | 2.5 |

## Claims

1. Process for the preparation of interesterified fats or glyceride oil, in which a mixture of fatty reactants is interesterified in the presence, as interesterification catalyst, of a lipase enzyme and a small amount of water to activate the catalyst and recovering a hardstock fat having a solids content of at least 20 at 20°C measured by NMR methods the process including, if necessary, a hardening and/or fractionation step and the fatty reactants of the said mixture comprising a $C_{16}/C_{18}$ fat or glyceride oil and a fatty reactant containing lauric or shorter chain fatty acid residues.

2. Process according to claim 1 wherein the fatty mixture comprises a mixture of a palm fat or its derivatives and a lauric fat containing at least 40% by weight of lauric acid or fats derived therefrom.

3. Process according to claim 2 wherein the said mixture comprises palm oil and palm kernel or coconut oil.

4. Process according to claim 1 or 2 wherein the said mixture comprises a mixture of palm fat or fat derived therefrom and a saturated fatty acid containing up to 12 carbon atoms.

5. Process according to claim 1 wherein pre-selected glycerides comprising interesterified fat having a solids content at 20°C of at least 20 measured by NMR methods are recovered by fractionation from a solvent.

6. Process according to claim 1 wherein the interesterification is carried out at a temperature at which pre-determined glycerides comprising the interesterified product are crystallised out to direct the interesterification.

7. Process for the preparation of a margarine hardstock fat according to claim 1 comprising saturation hydrogenating and interesterifying steps carried out in either order, wherein the fatty mixture comprises a mixture of a fat or glyceride oil with a fatty acid reactant and in which as interesterification catalyst a 1, 3 selective lipase enzyme is used, and fractionating the glyceride mixture in the rearranged product whereby a saturated hardstock fat is recovered.

8. Margarine fat comprising a fraction of a blend of palm and lauric fats 1, 3 selectively rearranged as claimed in claim 1, and a liquid vegetable oil base stock wherein the said fraction comprises from 40 to 75 wt% glycerides of carbon number 46 to 48 and is present in an amount from 5 to 20 wt% of the blend.

9. Margarine hardstock fat prepared as claimed in claim 7 and comprising glycerides MHH in which M is less than $C_8$ and $H=C_{16}/C_{18}$ fatty acid residues.

## Patentansprüche

1. Verfahren zur Herstellung von umgeesterten Fetten oder Glyceridöl, bei welchem eine Mischung aus Fettreaktionsteilnehmern in Anwesenheit eines Lipaseenzyms als Umesterungskatalysator und einer geringen Menge Wasser zum Aktivieren des Katalysators umgeestert und ein hochschmelzendes Fett mit einem Feststoffgehalt von mindestens 20 bei 20°C, gemessen durch NMR-Verfahren, gewonnen wird, wobei das Verfahren, falls nötig, eine Härtungs- und/oder Fraktionierstufe umfaßt und die Fettreaktionsteilnehmer der Mischung ein $C_{16}/C_{18}$-Fett oder Glyceridöl und einen Fettreaktionsteilnehmer, der Reste von Laurinsäure oder einer kürzerkettigen Fettsäure enthält, umfassen.

2. Verfahren nach Anspruch 1, worin die Fettmischung eine Mischung aus einem Palmfett oder dessen Derivaten und einem Laurinfett, das mindestens 40 Gew.-% Laurinsäure oder davon abgeleitete Fette enthält, umfaßt.

3. Verfahren nach Anspruch 2, worin diese Mischung Palmöl und Palmkern- oder Kokosnußöl umfaßt.

4. Verfahren nach Anspruch 1 oder 2, worin die Mischung eine Mischung aus Palmfett oder einem davon abgeleiteten Fett und einer gesättigten Fettsäure, die bis zu 12 Kohlenstoffatome enthält, umfaßt.

5. Verfahren nach Anspruch 1, worin die vorher ausgewählten Glyceride, die ein umgeestertes Fett mit einem Feststoffgehalt bei 20°C von mindestens 20, gemessen durch NMR-Verfahren, umfassen, durch Fraktionieren aus einem Lösungsmittel gewonnen werden.

6. Verfahren nach Anspruch 1, worin die Umesterung bei einer Temperatur erfolgt, bei welcher die vorher ausgewählten, das umgeesterte Produkt umfassenden Glyceride auskristallisiert werden, um die Umesterung auszurichten.

7. Verfahren zur Herstellung einer hochschmelzenden Fettkomponente für Margarine gemäß Anspruch 1, das Sättigungs-, Hydrier- und Umesterungsstufen umfaßt, die in irgendeiner Reihenfolge durchgeführt werden, worin die Fettmischung eine Mischung aus einem Fett oder Glyceridöl mit einem Fettsäurereaktionsteilnehmer umfaßt, und bei welchem als Umesterungskatalysator ein 1,3-selektives Lipaseenzym verwendet und die Glyceridmischung im umgelagerten Produkt fraktioniert wird, wodurch ein gesättigtes hochschmelzendes Fett gewonnen wird.

8. Margarinefett, umfassend eine Fraktion aus einem 1,3-selektiv umgelagerten Gemisch aus Palm- und Laurinfetten gemäß Anspruch 1 und eine Hauptmasse aus einem flüssigen Pflanzenöl, worin die Fraktion 40 bis 75 Gew.-% Glyceride einer Kohlenstoffzahl von 46 bis 48 umfaßt und in einer Menge von 5 bis 20 Gew.-% des Gemisches vorliegt.

9. Hochschmelzendes Fett für Margarine, hergestellt gemäß Anspruch 7 und umfassend die Glyceride MHH, in welchen M weniger als 8 C-Atome enthält und H für $C_{16}/C_{18}$-Fettsäurereste steht.

## Revendications

1. Procédé de préparation de graisse ou d'une huile de glycérides interestérifiée, dans lequel on interestérifie un mélange de réactifs gras en présence, à titre de catalyseur d'interestérification, d'une enzyme lipase et d'une petite quantité d'eau pour activer le catalyseur et la récupération d'une graisse dure ayant une teneur en matières solides d'au moins 20 à 20°C mesurée par des procédés RMN, le procédé comportant éventuellement un stade de durcissement et/ou de fractionnement et les réactifs gras dudit mélange comprenant une graisse ou huile de glycérides en $C_{16}/C_{18}$ et un réactif gras contenant des restes lauriques ou d'acides gras à chaîne plus courte.

2. Procédé selon la revendication 1, dans lequel le mélange gras comprend un mélange d'une graisse de palme ou ses dérivés et d'une graisse laurique contenant au moins 40% en poids d'acide laurique ou des graisses dérivées de celui-ci.

3. Procédé selon la revendication 2, dans lequel ledit mélange comprend de l'huile de palme et de l'huile de palmier ou de coprah.

4. Procédé selon la revendication 1 ou 2, dans lequel ledit mélange comprend un mélange de graisse de palme ou d'une graisse dérivée de celle-ci et d'un acide gras saturé contenant jusqu'à 12 atomes de carbone.

5. Procédé selon la revendication 1, dans lequel on récupère par fractionnement dans un solvant des glycérides préalablement choisis comprenant une graisse interestérifiée dont la teneur en solides à 20°C est d'au moins 20, selon une détermination par les procédés RMN.

6. Procédé selon la revendication 1, dans lequel on effectue l'interestérification à une température à laquelle les glycérides prédéterminés comprenant le produit interestérifié sont cristallisés pour diriger l'interestérification.

7. Procédé de préparation d'une graisse dure de margarine selon la revendication 1, qui consiste à hydrogéner à saturation et à interestérifier dans un ordre quelconque, le mélange gras comprenant un mélange d'une graisse ou d'une huile de glycérides avec un acide gras réactif avec utilisation, à titre de catalyseur d'interestérification, d'une enzyme lipase 1,3-sélective et fractionner le mélange de glycérides dans le produit regroupé de sorte qu'on récupère une graisse dure saturée.

8. Graisse de margarine comprenant une fraction d'un mélange de graisses de palme et laurique regroupé 1,3-sélectivement selon la revendication 1, et une huile végétale liquide de base, ladite fraction comprenant de 40 à 75% en poids de glycérides dont les nombres d'atome de carbone sont entre 46 et 48 et étant présente en une quantité de 5 à 20% en poids du mélange.

9. Graisse dure de margarine préparée selon la revendication 7 et comprenant des glycérides MHH dans lesquels M est inférieur à $C_8$ et H=restes d'acides gras en $C_{16}/C_{18}$.